# EUROPÄISCHE PATENTSCHRIFT

(11) **EP 1 226 984 B1**
(45) Veröffentlichungstag und Bekanntmachung des Hinweises auf die Patenterteilung: **22.03.2006**
(21) Anmeldenummer: 02450002.7
(22) Anmeldetag: 07.01.2002
(51) Int. Cl.: B60D 1/14

(54) **Anordnung zur Anbringung von Zug- bzw. Abschleppösen an gepanzerten Fahrzeugen**
Mounting arrangement for tow hooks to armoured vehicles
Dispositif de fixation des crochets de remorque aux véhicules blindés

(30) Priorität: 26.01.2001 AT 612001 U
(43) Veröffentlichungstag der Anmeldung: 31.07.2002
(73) Patentinhaber: Steyr-Daimler-Puch Spezialfahrzeug GmbH, 1110 Wien (AT)
(72) Erfinder: Kumpf, Bernhard, 2401 Fischamend (AT); Strassgürtl, Anton, 2432 Schwadorf (AT); Hermann, Manfred, 1020 Wien (AT)
(74) Vertreter: Rippel, Andreas

(56) Entgegenhaltungen:
- EP-A- 0 041 219
- WO-A-97/13955
- DE-A- 4 426 082
- FR-A- 2 572 337
- GB-A- 2 343 671
- US-A- 3 823 962

## Beschreibung

Die Erfindung bezieht sich auf eine Anordnung zur Anbringung von Zug- bzw. Abschleppösen an gepanzerten Fahrzeugen, wobei die Panzerplatten um die Öse herum versteift sind.

Zug- bzw. Abschleppösen, wie sie normalerweise auf Panzerfahrceugen angebracht sind, werden für Kräfte bis auf 1,5fache des Fahrzeuggewichtes ausgelegt. Diese hohen Kräfte werden bei stark gepanzerten Fahrzeugen ohne zusätzliche Versteifungen mittels angeschweißter Ösen in die Bugplatten eingeleitet. Bei leichten Panzerungen sind zusätzliche Versteifungen der Bugplatte zur Verringerung der Durchbiegung erforderlich. Diese Verstärkungen werden nach Bedarf entweder als Rippen, Träger innen oder außen ausgeführt. Nachteilig wirkt sich das Zusatzgewicht der Versteifungen, der geschwächte ballistische Schutz bei U-Trägern und die speziell bei stern- oder linienförmig versteiften Platten aufwendige teilweise filigrane Gestaltung von Zusatzpanzerung bzw. Spallinern aus.

Die Erfindung hat es sich zum Ziel gesetzt, eine Versteifung zu schaffen, die die geschilderten Nachteile der bekannten Versteifungen nicht aufweist. Erreicht wird dies bei einer Anordnung der eingangs genannten Art dadurch, daß die Versteifung als sphärisch gewölbte und/oder kegelförmige Verstärkungsplatte ausgebildet ist.

Eine erfindungsgemäße Anordnung hat den Vorteil, daß eine wesentlich geringere Beeinträchtigung für die Aufbringung einer Zusatzpanzerung erfolgt. Weiters wird die Anzahl der Spallinerteile gering gehalten. Auch ergibt die gewölbte oder kegelförmige Versteifung einen besseren ballistischen Schutz als schmale bzw. spitz zulaufende Teile, die sich bei üblichen Rippen- bzw. Trägerversteifungen ergeben würden. Außerdem können die an der Wanne montierten Rohrleitungen, Kabeln usw. ohne scharfe Umlenkungen platzsparend über die Versteifung geführt werden.

Zweckmäßig ist die Wölbung bzw. Kegelspitze der Verstärkungsplatte zum Fahrzeuginneren hin gerichtet.

Im Rahmen der Erfindung besteht die Möglichkeit, daß die Verstärkungsplatte einen Ausschnitt in der um die Öse herum sich erstreckenden Panzerplatte überdeckt. Bei dieser Ausführung entsteht praktisch keine zusätzliche Gewichtsbelastung.

Es ist aber auch möglich, daß die Verstärkungsplatte auf die sich um die Öse herum erstreckende Panzerplatte aufgedoppelt ist. Bei dieser aufgedoppelten Ausführung ist eine biegefeste Einbindung der Zugöse aufgrund der Stützwirkung in den beiden Blechen mit kleinen Schweißnähten möglich.

Bei einer weiteren Ausführungsform der Erfindung ist mit der Verstärkungsplatte eine außen liegende Rippe verbunden oder gegenüberliegend der Verstärkungsplatte angeordnet.

Nachstehend ist die Erfindung anhand von in den Zeichnungen dargestellten Ausführungsbeispielen näher beschrieben, ohne aber auf diese Beispiele beschränkt zu sein. Dabei zeigen
Fig. 1, 4 und 7 in schaubildlicher Ansicht die Außenseite je einer Ausführungsform einer erfindungsgemäßen Anordnung;
Fig. 2, 5 und 8 in ebenfalls schaubildlicher Ansicht jeweils die Innenseite der Anordnungen nach den Fig. 1, 4 und 7;
Fig. 3, 6 und 9 in vergrößertem Maßstab Schnitte durch die Ösen und anschließenden Teile.

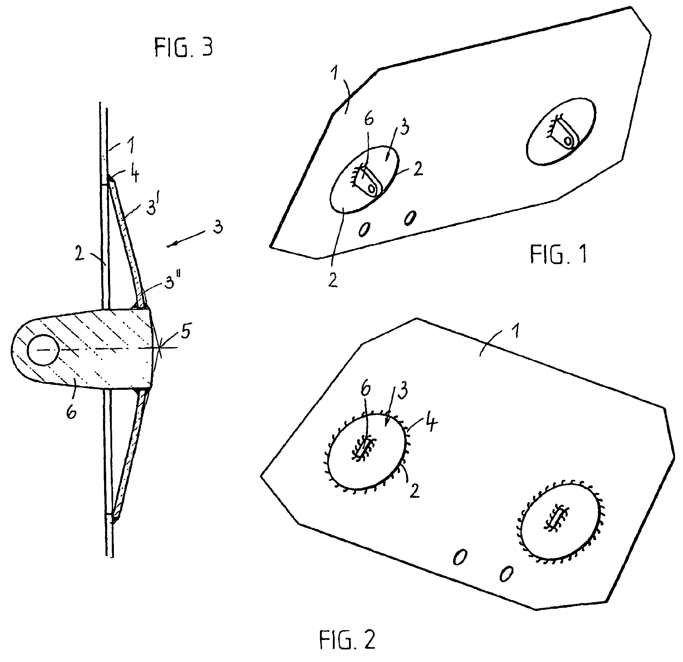

Gemäß den Fig. 1 bis 3 sind in einer Panzerplatte 1 Ausschnitte 2 angebracht. An der Innenseite dieser Ausschnitte 2 sind diese überdeckenden Verstärkungsplatten 3 mittels Schweißnähten 4 angeschweißt. Diese Verstärkungsplatten 3 sind an ihren äußeren Teilen 3' kegelförmig, an ihren inneren Teilen 3" sphärisch gekrümmt ausgebildet. Die ideelle Kegelspitze der äußeren Teile 3' liegt bei 5.

Im Bereich der Mitte der Verstärkungsplatte 3 ist mit dieser das innere Ende einer Öse 6 verschweißt.

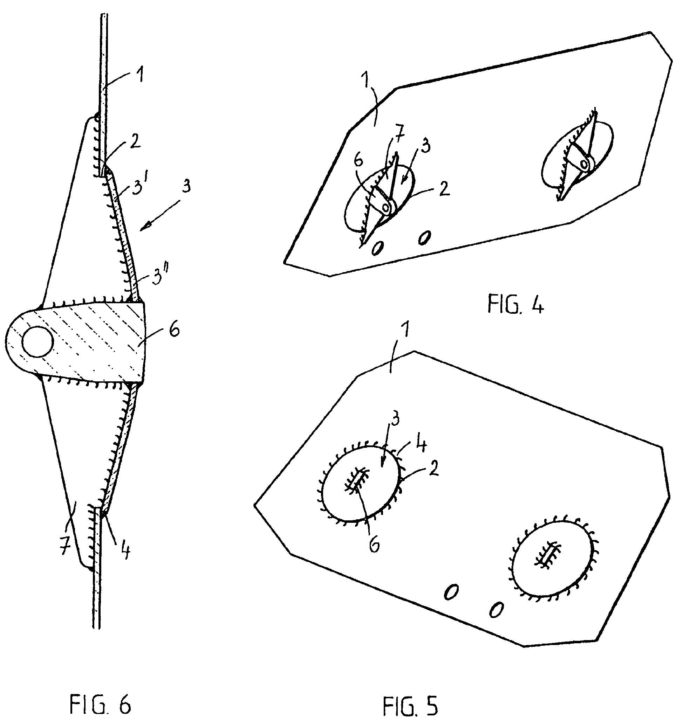

Die Ausführungsform nach den Fig. 4, 5 und 6 unterscheidet sich von der vorbeschriebenen Ausführungsform dadurch, daß mit der Verstärkungsplatte 3 eine außen liegende Rippe 7 verbunden ist.

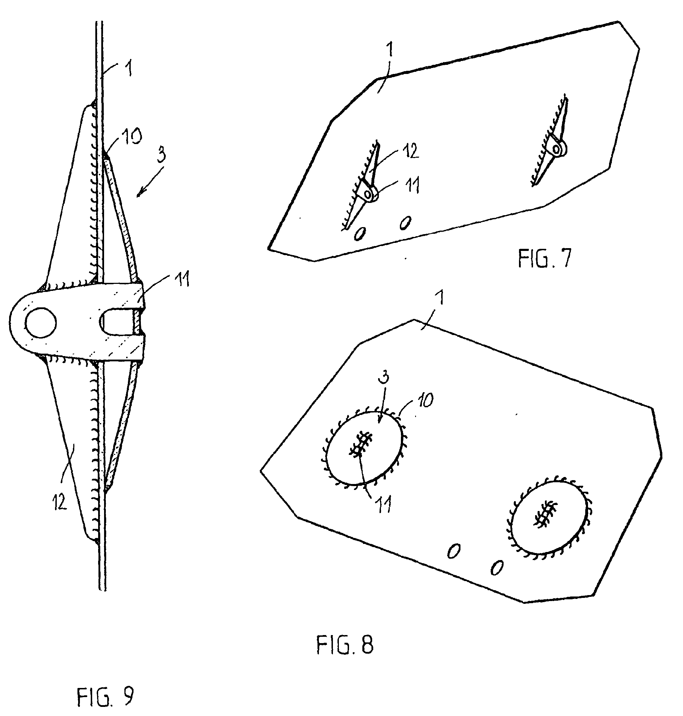

Bei der Ausführungsvariante nach den Fig. 7 bis 9 ist die Verstärkungsplatte 3 auf die Panzerplatte 1 aufgedoppelt. Es sind dadurch nur weniger Schweißnähte 10 für die Verbindung der Verstärkungsplatte 3 mit der Panzerplatte 1 erforderlich. Die Panzerplatte 1 ist nur für den Durchgang der Öse 11 durchbrochen. Die Rippe 12 liegt bis auf den Bereich der Öse 11 auf der Panzerplatte 1 an.

## Patentansprüche

1. Anordnung zur Anbringung von Zug- bzw. Abschleppösen (6, 11) an gepanzerten Fahrzeugen, wobei die Panzerplatten (1) um die Öse (6, 11) herum versteift sind, **dadurch gekennzeichnet, daß** die Versteifung als sphärisch gewölbte und/oder kegelförmige Verstärkungsplatte (3) ausgebildet ist.

2. Anordnung nach Anspruch 1, **dadurch gekennzeichnet, daß** die Wölbung bzw. Kegelspitze der Verstärkungsplatte (3) zum Fahrzeuginneren hin gerichtet ist.

3. Anordnung nach Anspruch 1 oder 2, **dadurch gekennzeichnet, daß** die Verstärkungsplatte (3) einen Ausschnitt (2) in der um die Öse (6) herum sich erstreckenden Panzerplatte überdeckt.

4. Anordnung nach Anspruch 1 oder 2, **dadurch gekennzeichnet, daß** die Verstärkungsplatte (3) auf die sich um die Öse (11) herum sich erstreckende Panzerplatte (1) aufgedoppelt ist.

5. Anordnung nach einem der Ansprüche 1 bis 4, **dadurch gekennzeichnet, daß** mit der Verstärkungsplatte (3) eine außen liegende Rippe (7, 12) verbunden ist oder gegenüberliegend der Verstärkungsplatte (3) angeordnet ist.

## Claims

1. A device for fitting armored vehicles with breakdown or drawbar couplings (6, 11), wherein the armor plating (1) is reinforced around the coupling (6, 11), **characterized in that** the reinforcement is designed as a spherically curved and/or conical reinforcing plate (3).

2. The device according to claim 1, **characterized in that** the curvature or conical tip of the reinforcing plate (3) is directed toward the vehicle interior.

3. The device according to claim 1 or 2, **characterized in that** the reinforcing plate (3) covers a cutout (2) in the armor plating extending around the coupling (6).

4. The device according to claim 1 or 2, **characterized in that** the reinforcing plate (3) is doubled on the armor plating (1) extending around the coupling (11).

5. The device according to one of claims 1 to 4, **characterized in that** an outer nb (7,12) is connected with the reinforcing plate (3) or situated opposite the reinforcing plate (3).

## Revendications

1. Système d'installation d'oeillets de traction ou de remorquage (6, 11) sur les véhicules blindés, dans lequel les plaques blindées (1) sont renforcées autour de l'oeillet (6, 11), **caractérisé en ce que** le renforcement est réalisé sous forme d'une plaque de renforcement (3) bombée en sphère et/ou de forme conique.

2. Système selon la revendication 1, **caractérisé en ce que** le bombement ou la pointe conique de la plaque de renforcement (3) est orienté vers l'intérieur du véhicule.

3. Système selon la revendication 1 ou 2, **caractérisé en ce que** la plaque de renforcement (3) recouvre une découpe (2) de la plaque blindée s'étendant autour de l'oeillet (6).

4. Système selon la revendication 1 ou 2, **caractérisé en ce que** la plaque de renforcement (3) est posée en doublage sur la plaque blindée (1) s'étendant autour de l'oeillet (11).

5. Système selon une des revendications 1 à 4, **caractérisé en ce qu'**à la plaque de renforcement (3) est reliée une nervure placée à l'extérieur (7, 12) et où que celle-ci est disposée en face de la plaque de renforcement (3).
